# EUROPEAN PATENT SPECIFICATION

(11) **EP 2 604 822 B1**
(45) Date of publication and mention of the grant of the patent: **10.07.2019**
(21) Application number: 11382384.3
(22) Date of filing: 16.12.2011
(51) Int. Cl.: F02C 3/055, F01C 1/344, F01C 11/00, F01C 13/04

(54) **Jet engine with sliding vane compressor**
Flugtriebwerk mit Flügelzellenverdichter
Turboréacteur avec compresseur à palettes coulissantes

(43) Date of publication of application: 19.06.2013
(73) Proprietor: Martinez Casañ, José Ramón, 46470 Massanassa (Valencia) (ES)
(72) Inventor: Martinez Casañ, José Ramón, 46470 Massanassa (Valencia) (ES)
(74) Representative: Pons

(56) References cited:
- WO-A1-80/00170
- WO-A1-2004/022919
- FR-A1- 2 910 056
- US-A- 3 057 157
- US-A- 3 228 196
- US-A1- 2006 065 232

## Description

### OBJECT OF THE INVENTION

The present invention pertains to the field of reaction engines.

The object of the invention consists of an improved reaction engine which, thanks to its special characteristics, allows for better performance.

### BACKGROUND OF THE INVENTION

A turbojet engine is a type of internal combustion engine frequently used to propel an aircraft. The air is dragged to a rotary compressor through the air intake and is compressed, during several successive stages, at high pressure before entering the combustion chamber. The fuel is mixed with the compressed air and ignited. This combustion process considerably increases the temperature of the gas. The result of the combustion leaves to expand through the turbine, where the energy is extracted to move the compressor. Although this expansion process reduces both the temperature and the gas pressure, they are both generally kept higher than the averages thereof. The flue gas leaving the turbine expands to the atmospheric pressure through a propulsion nozzle, producing a high speed stream. If the speed of this stream of gasses exceeds the speed of the airplane, then there is a net thrust forward.

Under normal conditions, the action of the compressor pump ensures against any backward movement of the flow, thus achieving a continuous process in the engine. In fact, the complete process is similar to the four stroke cycle, but where the admission, compression, ignition, expansion and outlet are carried out simultaneously, but in different sections of the engine. The efficiency of a reaction engine strongly depends on the pressure ratios and the turbine temperature.

Comparing the turbojet with the conventional propeller engine, the former takes a relatively small amount of air mass and accelerates it considerably, while a propeller uses a large air mass and only accelerates it a bit. The exit of gases from a turbojet engine at high speeds makes it effective at high speeds, especially for supersonic jets, and at high altitudes. In slower airplanes and those that only make short flights, a gas turbine driven by a propeller, known as a turboprop, is more common and efficient.

The simplest turbojet has a single turbine, wherein a single shaft connects the turbine to the compressor. Designs with higher pressure ratios tend to have two concentric shafts, improving the stability of the compressor. The high pressure shaft connects the compressor and high pressure turbine. This external high-pressure coil, with the combustion chamber, forms the core or engine generator. The internal shaft connects the low-pressure compressor with the los-pressure turbine. Both coils can operate freely in order to achieve optimal velocities, like in supersonic airplanes such as the Concord. The main components of a reaction engine are similar in different types of engines, although not all kinds have all of the components. The main parts include:
- Inlet or air intake: for subsonic airplanes, the air intake towards the reaction engine does not present special difficulties, and essentially consists of an opening which is designed to reduce resistance like any other airplane element. Nevertheless, the air which reaches the compressor of a normal reactor must travel at a speed below the speed of sound, including in supersonic airplanes, to maintain fluid mechanics in the compressor and the turbine blades. At supersonic speeds, the shock waves which form at the air inlet reduce the pressure in the compressor. Some supersonic air inlets use systems, such as a cone or ramp, to increase the pressure and make it more efficient against shock waves.
- Compressor or fan: the compressor is made up of several stages. Each stage consists of blades which rotate and stators which remain stationary. Air passes through the compressor, increasing its pressure and temperature. The energy is derived from the turbine which passes through the rotor.
- Shaft, which is responsible for transporting energy from the turbine to the compressor and operates along the engine. There can be up to three concentric rotors, rotating at independent speeds, operating in both the groups of turbines and compressors.
- Combustion chamber, where the fuel is continuously burned in the compressed air.
- Turbine, acting as a wind mill, extracting energy from the hot gases produced in the combustion chamber. This energy is used to move the compressor through the rotor, bypass fan, propellers or even to convert the energy to use it in another place through an accessory box with different outlets. Relatively cold air can be used to cool the combustion chamber and the turbine blades and prevent them from melting.
- Post combustor: mainly used in military airplanes, it produces an additional thrust, burning fuel in the nozzle area, generally inefficiently, to increase the inlet temperature of the nozzle.
- Nozzle or outlet: hot gases leave the engine towards the atmosphere through a nozzle, whose goal is to produce an increase in the speed of these gases. In most cases, the nozzle is convergent or of fixed flow area. Supersonic nozzle: if the pressure ratio of the nozzle (the division between entrance pressure of the nozzle and the atmospheric pressure) is very high, in order to maximize the thrust it can be efficient, in spite of the increase in weight, use a convergent-divergent nozzle or a Laval nozzle. This type of nozzle is initially convergent, but beyond the throat (the narrowest area), it begins to increase its area in the divergent part.

The optimization of an engine depends on many factors, including the design of the air intake, the total size, the number of compressor stages, the type of fuel, the number of outlet stages, the component materials, the amount of air derived in the cases when air diversion is used, etc.

Likewise in precooled turbojet engines, engines that need to operate at low hypersonic speeds can theoretically have a higher performance if the heat exchanger is used to cool the entering air. The low temperature permits the use of lighter materials and the injection of more fuel. This idea was converted into designs such as SABRE, which would allow orbital flight in one stage, and ATREX, which can use engines as boosters for spatial vehicles. This occurs similarly in a rocket at the moment of take off. A 10g force increases and the thrust is linearly accelerated.

Scramjets or supersonic combustion ramjets are the evolution of the ramjet which permits operation at greater speeds. They share a similar structure to the ramjet, being basically a tube which compresses air with mobile parts. Nevertheless, in scramjets the airflow is supersonic through the entire engine, without needing to use the diffusers of the ramjets to maintain the subsonic air speed. Scramjets begin to operate at Mach 4 speeds and have a maximum theoretical speed of Mach 17. The main drawbacks of scramjets are those related to cooling due to heating at high speeds.

There are some known similar developments like:
- FR2910056 that discloses a rotary wing-less vertical take-off and landing vehicle for transporting passengers by air, has rear wing whose variable incidence is set to generate lift force in take-off mode, and added to forces developed on front wings in cruise mode; wherein the vehicle has a positive-displacement rotary compressor supplying compressed air to a tank that is connected to combustion chambers. Exhaust gases from one of the chambers actuate a compressor-driving turbine and are discharged onto an upper surface of a fixed rear wing. Exhaust gases from the other chamber are discharged directly onto an upper surface of a rear wing. A variable incidence of the wing is set to generate a lift force in take-off mode, and is added to forces developed on front wings in cruise mode.
- WO2004022919 that discloses a solo use of the turbo-rotary engine that comprisese compressor and turbine housings, each housing receiving an eccentrically placed rotor, equipped by a single sliding vane. Contact wear of the sliding vane tips with the chamber non-circular cycloidal peripheral, is eliminated by a pivot axle vane retention mechanism. For high mass flow rate, a compound configuration of rotary compressors and turbines with conventional gas turbine engine components.
- WO8000170 that discloses a positive displacement, constant pressure Brayton cycle engine including a compressor, a combustion chamber, a motor and means for operating the engine in a substantially constant pressure Brayton cycle including means for continuously heating the gas in the combustion chamber at constant pressure and means for feeding a continuous stream of hot, compressed gas at constant pressure solely to the motor. Preferably one or both of the compressor and motor are positive displacement rotary sliding vane devices. The engine can be operated with an intermittent hot-cool operating cycle and with various throttle control systems.

- US3228196 and US3057157 that respectively disclose a rotary engine.
- US2006065232 that discloses an engine comprising a compression unit, an expansion unit and a connecting structure disposed between the compression and expansion units and also means for supplying energy to the engine, wherein the connecting structure includes an air inlet area for receiving compressed air from the compression unit and an air outlet area for appropriating gas to the expansion unit, the connecting structure includes a gas volume which is delimited by the compression unit in the air inlet area and by the gas expansion unit in the air outlet area and the gas in the expansion unit is expanded to a pressure corresponding essentially to the pressure of the ambient air.

Nonetheless there is no current solution for turbo engines which may take into account any vibrations or possible imbalances which may arise between pressures existing in the engine.

### DESCRIPTION OF THE INVENTION

The object of the invention is a high performance, energetically efficient reaction engine as defined in claim 1, which features a compressor block defined by a high speed, eccen rotor turbo compressor with a rotor that, in a preferred embodiment of the object of invention, comprises four self-adjusting, cross-sectioned blades - since they are equipped with adjusting mechanisms defined by springs inserted in the interior thereof - on the stator with automatic recovery. This system facilitates closure in the radial direction while closure in the axial direction is carried out by two retainer rings situated on the two inner faces of the stator.

The aforementioned stator has a stator air inlet channel situated in a cool part of the stator and which is responsible for feeding the turbo compressor. This duct connects to an inlet channel situated in the rotor chamber and is offset 45° with respect to the stator air exhaust channel, already compressed. The shutoff between the two stator air channels is ensured by means of three cross-sectioned blades with an edge that features an essentially serrated shape or a key shape (preferably double wedge), which make a labyrinth seal and self-adjust with respect to the peripheral face of the rotor. In its hot area, the stator has channels - preferably three, but this number can vary according to the embodiment - wherein electronic distribution rods are situated. These electronic distribution rods control shock absorbers located at stator expulsion valves of the stator air exhaust channel and the possible imbalances that may arise between the pressures of a stator inlet valve in the stator air inlet channel, and the distribution rods.

Also located in the aforementioned hot part of the stator is an annular pressure and regulation chamber which directly connects to the distribution rods, while a non-return valve is preferably used for connecting to the compressor, together with an electronically actuated relief valve of the compressor and a pressure balanced two-way valve which directly actuates either only on the boiler or on the boiler and the pressure and regulator chamber.

Another important part of the object of invention is made up of a main combustion block, formed by a specific number of spherical, air-cooled combustion chambers, preferably six, where in each one of said combustion chambers a chamber air inlet channel, a chamber air exhaust channel and chamber housings for a fuel injector and at least one spark plug are respectively found. Chamber inlet guide valves, which are compact groups which regulate entrance of air, are placed in the aforementioned chamber air inlet channels, while chamber expulsion guide valves, which are cooled compact groups preferably lubricated by three pressure oil circuits, are placed in the chamber air exhaust channels.

The engine torque transmission systems of the engine described herein can be made of one, two or three coaxial shafts (a main or primary shaft, a second shaft and a third shaft) responsible for distributing driving force to all parts of the transmission system of the object of invention. The first shaft connects the two high-pressure turbines, which is where the operating pressure is generated, with the reduction system gear box and auxiliary services (pressure and lubricating pumps, recovery pump, current generator and start-up motor) while the second shaft transmits power from the reduction system gear box to the compressor rotor shaft; likewise, the third shaft connects the three low-pressure turbines from the hot part with the planetary part and this, in turn, transmits the torque to the frontal low-pressure turbines and to the fan.

One of the differentiating characteristics of the object of invention comes from the lubricating system thereof, given that this is an engine with a specific configuration, and in turn a specific lubrication is required. The lubricating system of the engine disclosed herein used pressure generated by pressure pumps, channelling and recoveries arranged along them, or at specific points of the lubricating circuit; thus achieving the lubrication of the turbine bearings, the inlet and recovery valves, the reduction and planetary gear boxes.

As explained above, the compressor block of the engine disclosed herein comprises a high speed, eccentric rotor turbo compressor with a rotor which features four cross-sectioned, self-adjusting blades on the stator with automatic recovery; this characteristic is achieved by inserting one or more springs inside each blade - more specifically they are arranged orthogonally to one of the shorter sides of the blade - so that they exert a force that ensure the perfect adjustment between the other end - the other shorter side - on the inner walls of the stator. This system facilitates closure in the radial direction while closure in the axial direction is performed by two retainer seals situated on the two lower faces of the stator.

The aforementioned stator features the stator air inlet channel situated in the cold part of the stator, and which is responsible for supplying the turbo compressor. This duct connects to an inlet channel situated in the rotor chamber and is offset 45° with respect to the stator air exhaust channel, already compressed. The shutoff between the two stator air channels is ensured by means of three cross-sectioned blades, which execute a labyrinth seal and self-adjust with respect to the peripheral face of the rotor. In the hot area of the stator there are four housings where the electronic distribution rods are situated. These distribution rods control the shock absorbers of the expulsion valve and the imbalance between the pressures of the stator air inlet valve and the distribution rods. Also located in this hot area of the stator is the annular pressure and regulation chamber. This pressure and regulation chamber directly connects to the distribution rods, while a non-return valve is used for connecting to the compressor. An electronically actuated relief valve of the compressor and a pressure balanced two-way valve which directly actuates either only on the boiler or on the boiler and the pressure and regulator chamber are also found in this hot area. The stator is closed with a lid which ensures that no pressure is lost in the turbo compressor supply and also wraps the entire reduction system. This lid channels the low pressure air, coming from the low pressure compressor, towards the stator inlet chamber.

A combustion chamber block features the above referred main combustion block and is formed by the four spherical combustion chambers. In each one of said combustion chambers there is a chamber air inlet channel - wherein the chamber air inlet guide valves, which are compact groups which regulate the entrance of air, are placed -, one or more chamber air exhaust channels - wherein the chamber exhaust guide valves, which are compact groups cooled and lubricated by pressure oil circuits, are placed - and the chamber housings for the fuel injector and spark plug.

The engine torque transmission is carried out by a system made up of two shafts, which are responsible for distributing the drive force to all parts of the system. The first shaft connects the four high-pressure turbines, which is where the operating pressure is generated, to the reduction system gear box.

The second shaft transmits power from the reduction system gear box to the shaft of the two low pressure turbines and to the lower shaft where the fan, the current generator and the cooling and lubricating pumps are found.

The engine has a pressure lubricating system via pressure and recovery pumps. This system achieves the lubrication of the turbine bearings, the inlet and recovery valves, the reduction gear box and the planetary gear box.

Finally, it should be highlighted that the engine object of the invention can have one or more turbines, whether they are high pressure or low pressure, and they can be solidly joined to each other.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1.- Shows an exploded view of the engine object of the invention.
Figure 2.- Shows a cross-sectional view of the engine object of the engine, once assembled.-

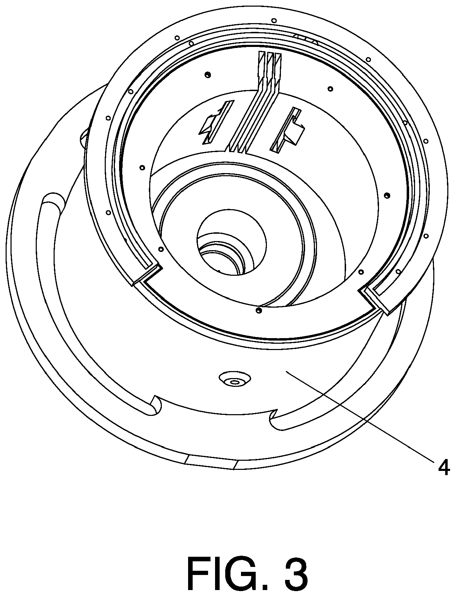

Figure 3.- Shows a perspective view of the rotor-stator unit as well as the self-adjustable blades.

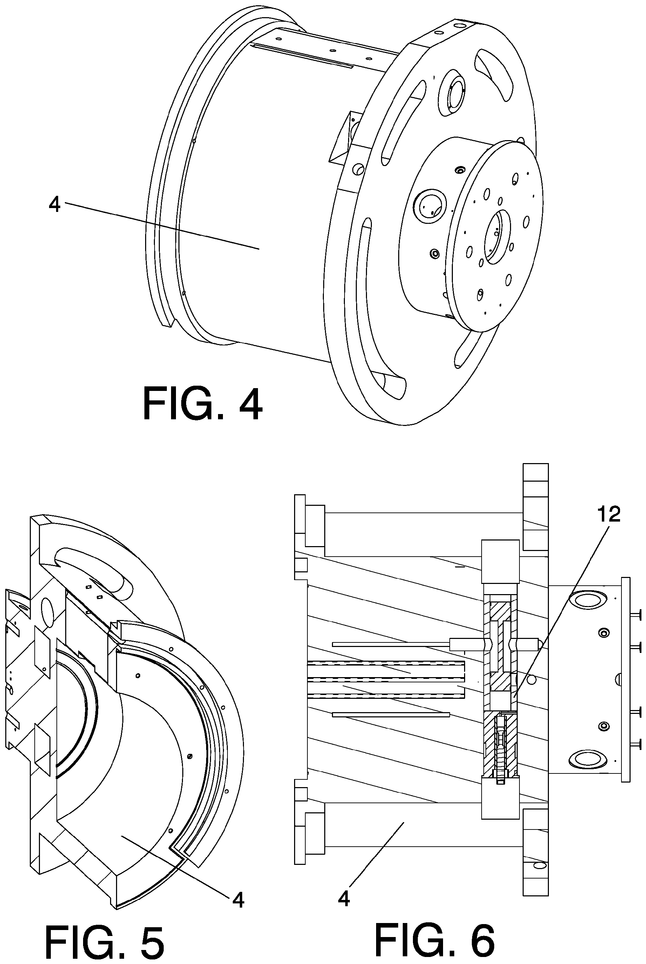

Figure 4.- Shows a perspective view of the rotor-stator unit.
Figure 5.- Shows a perspective, cutaway view of the rotor-stator unit.
Figure 6.- Show a cross-sectional view of the rotor-stator unit.
Figure 7.- Shows perspective views of the rotor-stator unit with the blades assembled.
Figure 8.- Shows a cross-sectional view of a transmission element.

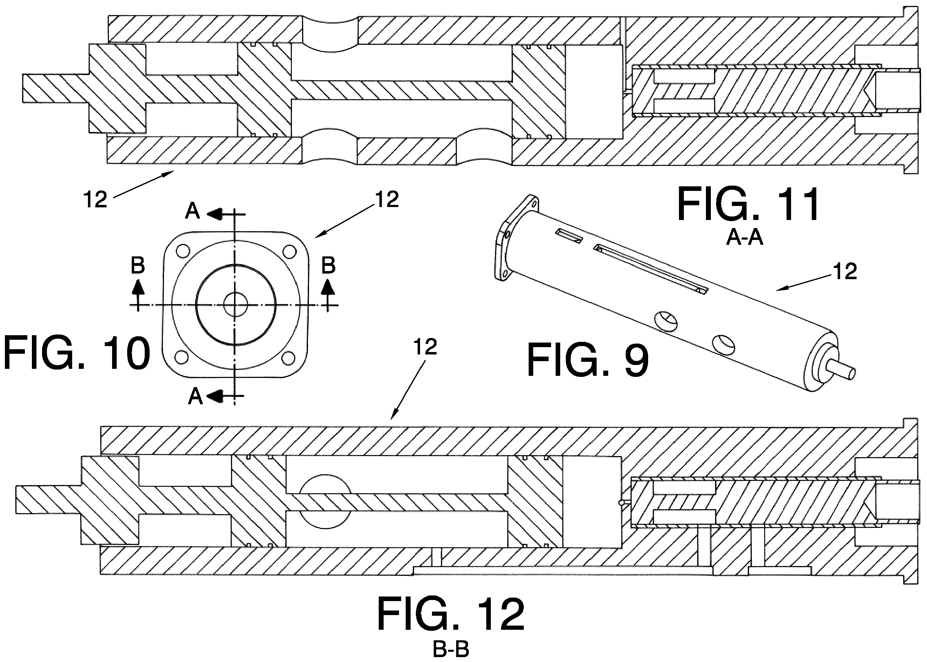

Figure 9.- Shows a perspective view of the distribution rod.
Figure 10.- Shows a plan view of the distribution rod.
Figure 11.- Shows a cross-sectional view of the distribution rod.
Figure 12.- Shows a plan view of the distribution rod wherein the distribution of inlets and outlets are observed.

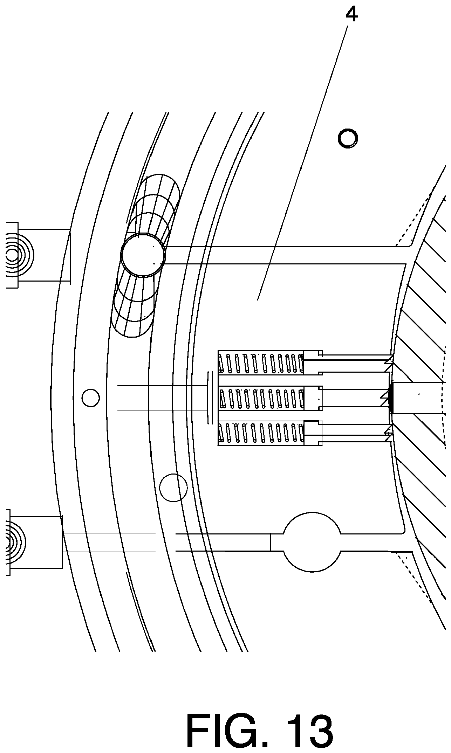

Figure 13.- Shows a cross-sectional view of the rotor-stator unit wherein the blades of the labyrinth seal are observed.

### PREFERRED EMBODIMENT OF THE INVENTION

In view of the figures, a preferred embodiment of the engine (1) object of this invention is described below.

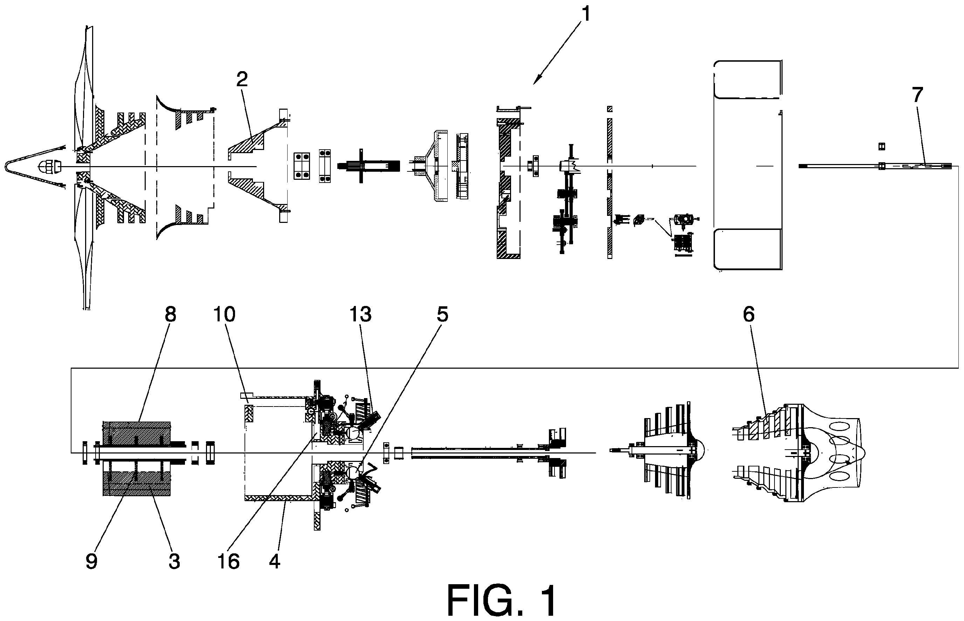

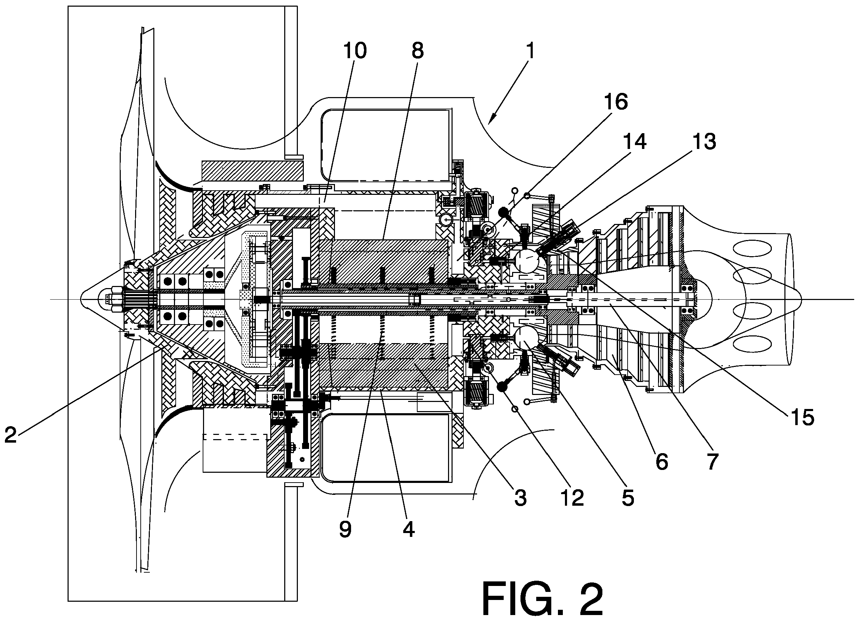

The reaction engine (1) featured in figure 2 disclosed herein and whose arrangement and configuration are observed in figure 1 bases its operation on an air inlet and a combustion just like all conventional reaction engines, only that the engine (1) disclosed herein makes use of a compressor block equipped with at least a compressor (2) intended to carry out a compression of air that enters the engine (1), which in turn comprises a rotor (3) and a stator (4), a combustion block where at least one combustion chamber (5) is found, where ignition of a fuel is produced together with high pressured air coming from the compressor (2). Exhaust gases produced in the combustion chambers (5) arrive at least at a turbine (6) which is actuated by said gases, and which comprises a torque transmission system with at least one shaft (7) which is connected to the compressor (2), thus carrying out the aforementioned air compression. The stator (4) of the compressor (2) of the engine (1) object of the invention is eccentric with respect to the rotor (3), which permits an alternate radial displacement of an array of radial blades (8) disposed on the rotor (3) to carry out a closure in the radial direction of a unit formed by the rotor (3) and the stator (4).

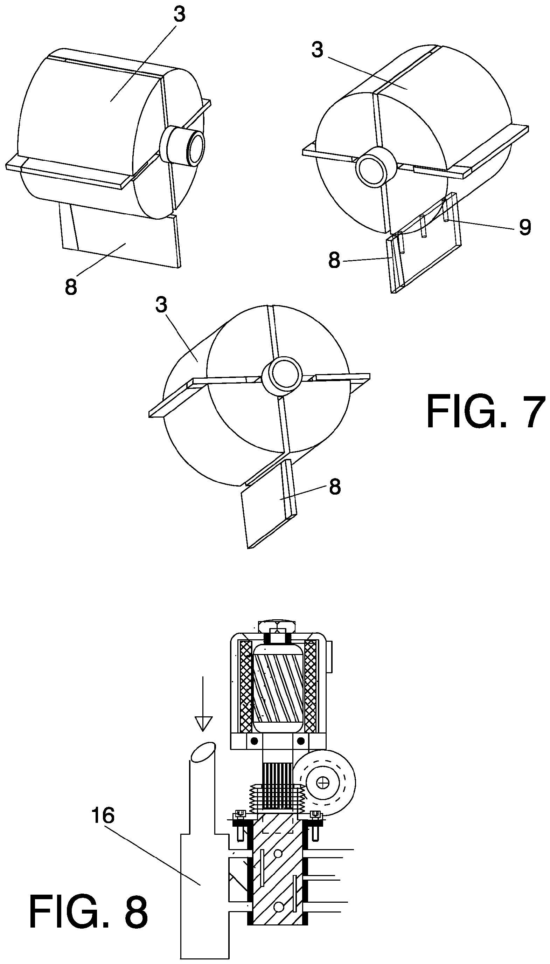

For the radial blades (8) to perform the aforementioned closure with a precision adjustment, they have elastic elements (9) - which can be observed in closer detail in figure 7 and which in a preferred embodiment of this invention are springs inserted inside the blades (8) as can be observed in said figure 7 - said elastic elements (9) are arranged between said blades (8) and the rotor (3) exerting pressure, pressure corresponding to a force inherent to a compressed spring, to provide the latter with automatic position recovery by thus adjusting the blades (8) on the stator (4), more specifically so that the elastic elements (9) which are located inside one of lateral profiles of the blade (8) exert a force, pushing the blade (8), these are located on the inside of the thickest wall, since the blade (8) can be configured in a wedge shape and can be sectioned while the elastic elements (9) can be springs intended to exert pressure between the blade (8) and the inside of the stator (4).

The stator (4) comprises at least a retainer ring disposed on an inner face thereof intended to carry out the closure of the unit formed by the stator (4) and the rotor (3) in the axial direction and furthermore the stator (4) comprises a stator air inlet channel (10) intended to supply the compressor and is connected to an inlet channel disposed in a chamber in the rotor (3) and which is offset 45° with respect to the air exhaust channel, already compressed.

The air is driven throughout the engine (1) in various ways; for this purpose, for example, the compressor (2) also comprises a stator inlet valve disposed in the stator air inlet channel (10) and a stator expulsion valve disposed in the stator air exhaust channel.

In the aforementioned compressor (2) is at least one, preferably two, cross-sectioned blades which make a labyrinth seal and which can comprise springs inside one of the adapted faces thereof to exert pressure with respect to the peripheral face of the rotor (3) and carry out the blockage of air between the stator air inlet channel and the stator air exhaust channel. The stator (4) of the compressor (2) comprises at least two channels wherein are found at least an electronic distribution rod (12) adapted to control shock absorbers (13) arranged on the stator expulsion valve, and the possible imbalances which can arise between pressures as well as an annular pressure and regulation chamber (15) which is connected to the electronic distribution rod (12) which have a non-return valve intended to carry out communication with the compressor (2) as well as an electronically actuated compressor relief valve and a pressure balanced two-way valve adapted to actuate directly on: a boiler or on the boiler and the pressure and regulation chamber.

Once the air and fuel arrive to the combustion block, an ignition is produced in at least one of the spherical combustion chambers (5), preferably in a number of four, which comprise a chamber air inlet channel, a chamber exhaust channel, and a chamber housing for the fuel injector, the ignition whereof, once mixed, is performed by means of at least a spark plug intended to carry out the ignition, which is housed in a hollow part of the combustion block. The combustion block is complemented by a chamber inlet guide valve (14) disposed in the chamber air inlet channel to regulate the entrance of air into the combustion chamber (5), and a chamber expulsion guide valve disposed in the chamber air exhaust channel to regulate exit of the exhaust gases.

Once the combustion has been completed, the force generated is transmitted by means of a torque transmission system comprising:
- a first shaft (7) which connects a high pressure turbine equipped with a system reduction gear box, and
- a second shaft which transmits the power from the system reduction gear box to the shaft of at least a low pressure turbine and to a lower shaft where the following are located: a fan, a current generator, and cooling and lubricating pumps.

In an alternative embodiment of the object of the invention the transmission system is made up of the shaft (7) which connects the high pressure turbine, intended to generate the operating pressure and equipped with a reduction gear box and auxiliary services - pressure and lubricating pumps, recovery pump, current generator and start-up motor - a second shaft which transmits the power from the system reduction gear box to a shaft of the (3) rotor of the compressor (2), and a third shaft which connects the low pressure turbine (6) of a hot part of the engine (1), to a planetary gear box intended to transmit the torque to: another low pressure turbine located in the front part of the engine (1) and to a fan.

Whatever the embodiment may be, the engine (1) needs lubrication and/or refrigeration and it is for this reason that a lubrication system (16) is incorporated which uses the pressure generated in pressure and recovery pumps disposed in the engine (1) to distribute a lubricating fluid to: bearings in the turbine (6), the valves, the reduction gear box and the planetary gear box. The lubricating and/or cooling system features a series of ducts which are responsible for making the fluid arrive at its destinations.

## Claims

1. Reaction engine (1) which comprises:
- a compressor block equipped with at least a compressor (2) intended to carry out a compression of air that enters the engine (1) and which comprises, in turn, a rotor (3) and a stator (4), the stator (4) comprising a stator air inlet channel (10) and a stator air exhaust channel, the latter comprising a stator expulsion valve,
- a combustion block, which in turn comprises at least a combustion chamber (5) intended to house an ignition of a fuel together with high pressured air coming from the compressor block,
- a turbine (6) actuated by exhaust gases produced in the combustion chamber (5) and which comprises a torque transmission system with at least a shaft (7) which is joined to at least the compressor (2) thus carrying out the aforementioned compression of air, wherein the stator (4) of the compressor (2) is eccentric with respect to the rotor (3) which permits alternative radial displacement of an array of radial blades (8) disposed on the rotor (3) to carry out the closure in a radial direction of a unit formed by the rotor (3) and the stator (4), the reaction engine (1) **characterized by** comprising:
- shock absorbers (13) arranged on the stator expulsion valve; and
- at least two further channels located in the stator (4) wherein are disposed electronic distribution rods (12) adapted to control the shock absorbers (13).

2. Reaction engine (1) according to claim 1, **characterized in that** the radial blades (8) comprise elastic elements (9) disposed between said blades (8) and the rotor (3) to provide the latter with automatic position recovery, thus adjusting themselves on an inner face of the stator (4).

3. Reaction engine (1) according to claim 2, **characterized in that** elastic elements (9) are located inside one of the lateral profiles of the blade (8).

4. Reaction engine (1) according to claim 3, **characterized in that** the elastic elements (9) are springs intended to exert pressure between the blade (8) and the inside of the stator (4).

5. Reaction engine (1) according to any of claims 2 to 4, **characterized in that** the blades (8) are at least partially sectioned.

6. Reaction engine (1) according to any of the preceding claims, **characterized in that** the stator (4) comprises at least a retainer ring disposed on the inner face thereof intended to carry out the closure of the array formed by the stator (4) and the rotor (3) in the axial direction.

7. Reaction engine (1) according to claim 1, **characterized in that** the compressor (2) comprises at least one at least partially sectioned blade adapted to make a labyrinth seal and which comprises elastic elements (9) in the interior thereof on at least one of its faces, which are adapted to exert pressure from the blade with respect to the peripheral face of the rotor (3) to carry out the blockage of the passage of air between the stator air inlet channel (10) and the stator air exhaust channel.

8. Reaction engine (1) according to claim 1, **characterized in that** the stator (4) of the compressor (2) further comprises an annular pressure and regulation chamber (15) connected to the distribution rods (12).

9. Reaction engine (1) according to claim 8, **characterized in that** the electronic distribution rods (12) comprise a non-return valve intended to carry out connection with the compressor (2) and an electronically actuated compressor relief valve and a pressure balanced two-way valve adapted to actuate directly on: a boiler or on the boiler and the pressure and regulation chamber (15).

10. Reaction engine (1) according to claim 1, **characterized in that** the at least one combustion chamber (5) of the combustion block is spherical and comprises:
• a chamber air inlet channel,
• a chamber air exhaust channel, and
• a chamber housing for housing a fuel injector.

11. Reaction engine (1) according to claim 10, **characterized in that** the combustion block further comprises at least a hollow space wherein a spark plug is located which is intended to carry out the ignition.

12. Reaction engine (1) according to claims 10 or 11, **characterized in that** the combustion block comprises a chamber inlet guide valve (14) disposed in the chamber air inlet channel to regulate the entrance of air to the combustion chamber (5), and a chamber expulsion guide valve disposed in the chamber exhaust channel to regulate the exit of the exhaust gases.

13. Reaction engine (1) according to any of claims 1 to 12, **characterized in that** it further comprises a lubrication system (16) which uses pressure generated in pressure and recovery pumps disposed in the engine (1) to distribute a lubricating fluid.

## Patentansprüche

1. Rückstoßantrieb (1), der Folgendes umfasst:
- einen Kompressorblock, der mit mindestens einem Kompressor (2) ausgestattet ist, der eine Kompression von Luft ausführen soll, die in den Antrieb (1) eintritt, und der wiederum einen Rotor (3) und einen Stator (4) umfasst, wobei der Stator (4) einen Statorlufteinlasskanal (10) und einen Statorluftauslasskanal umfasst,
wobei Letzterer ein Statorausstoßventil umfasst,
- einen Brennblock, der wiederum mindestens eine Brennkammer (5) umfasst, in der eine Zündung eines Brennstoffs zusammen mit Hochdruckluft aufgenommen werden soll, die von dem Kompressorblock kommt,
- eine Turbine (6), die durch Abgase betätigt wird, die in der Brennkammer (5) erzeugt werden, und die ein Drehmomentübertragungssystem mit mindestens einer Welle (7) umfasst, die mindestens mit dem Kompressor (2) verbunden ist, wodurch die vorgenannte Kompression von Luft ausgeführt wird, wobei der Stator (4) des Kompressors (2) in Bezug auf den Rotor (3) außermittig ist, was eine alternative radiale Verschiebung eines Arrays radialer Schaufeln (8) ermöglicht, die an dem Rotor (3) angebracht sind, um in einer radialen Richtung das Schließen einer Einheit auszuführen, die durch den Rotor (3) und Stator (4) gebildet wird, wobei der Rückstoßantrieb (1) **dadurch gekennzeichnet ist, dass** er Folgendes umfasst:
- Stoßdämpfer (13), die an dem Statorausstoßventil angeordnet sind; und
- mindestens zwei weitere Kanäle, die in dem Stator (4) angebracht sind, wobei elektronische Verteilungsstäbe (12) angebracht sind, die dazu ausgelegt sind, die Stoßdämpfer (13) zu steuern.

2. Rückstoßantrieb (1) nach Anspruch 1, **dadurch gekennzeichnet, dass** die radialen Schaufeln (8) elastische Elemente (9) umfassen, die zwischen den Schaufeln (8) und dem Rotor (3) angebracht sind, um Letzterem eine automatische Positionsrückgewinnung bereitzustellen, wodurch sie sich selbst an einer Innenfläche des Stators (4) einstellen.

3. Rückstoßantrieb (1) nach Anspruch 2, **dadurch gekennzeichnet, dass** sich die elastischen Elemente (9) innerhalb eines der seitlichen Profile der Schaufel (8) befinden.

4. Rückstoßantrieb (1) nach Anspruch 3, **dadurch gekennzeichnet, dass** die elastischen Elemente (9) Federn sind, die Druck zwischen der Schaufel (8) und dem Inneren des Stators (4) ausüben sollen.

5. Rückstoßantrieb (1) nach einem der Ansprüche 2 bis 4, **dadurch gekennzeichnet, dass** die Schaufeln (8) mindestens teilweise unterteilt sind.

6. Rückstoßantrieb (1) nach einem der vorstehenden Ansprüche, **dadurch gekennzeichnet, dass** der Stator (4) mindestens einen Haltering umfasst, der an der Innenfläche davon angebracht ist, der in axialer Richtung das Schließen des Arrays ausführen soll, das durch den Stator (4) und den Rotor (3) gebildet wird.

7. Rückstoßantrieb (1) nach Anspruch 1, **dadurch gekennzeichnet, dass** der Kompressor (2) mindestens eine mindestens teilweise unterteilte Schaufel umfasst, die dazu ausgelegt ist, eine Labyrinthdichtung herzustellen, und der elastische Elemente (9) in dem Inneren davon auf mindestens einer seiner Seiten umfasst, die dazu ausgelegt sind, Druck von den Schaufel in Bezug auf die Umfangsseite des Rotors (3) auszuüben, um das Blockieren des Luftdurchgangs zwischen dem Statorlufteinlasskanal (10) und dem Statorluftauslasskanal auszuführen.

8. Rückstoßantrieb (1) nach Anspruch 1, **dadurch gekennzeichnet, dass** der Stator (4) des Kompressors (2) ferner eine ringförmige Druck- und Regelkammer (15) umfasst, die mit den Verteilungsstäben (12) verbunden ist.

9. Rückstoßantrieb (1) nach Anspruch 8, **dadurch gekennzeichnet, dass** die elektronischen Verteilungsstäbe (12) ein Rückschlagventil umfassen, das die Verbindung mit dem Kompressor (2) und einem elektronisch betätigten Kompressorentlastungsventil und einem druckausgeglichenen Zweiwegeventil ausführen soll, das dazu ausgelegt ist, direkt auf einen Kessel oder auf den Kessel und die Druck- und Regelkammer (15) zu wirken.

10. Rückstoßantrieb (1) nach Anspruch 1, **dadurch gekennzeichnet, dass** mindestens eine Brennkammer (5) des Brennblocks kugelförmig ist und Folgendes umfasst:
• einen Kammerlufteinlasskanal,
• einen Kammerluftauslasskanal, und
• ein Kammergehäuse zum Aufnehmen eines Kraftstoffinjektors.

11. Rückstoßantrieb (1) nach Anspruch 10, **dadurch gekennzeichnet, dass** der Brennblock ferner mindestens einen Hohlraum umfasst, in dem sich eine Zündkerze befindet, welche die Zündung ausführen soll.

12. Rückstoßantrieb (1) nach Anspruch 10 oder 11, **dadurch gekennzeichnet, dass** der Brennblock ein Kammereinlassführungsventil (14), das in dem Kammerlufteinlasskanal angebracht ist, um das Eintreten von Luft in die Brennkammer (5) zu regulieren, und ein Kammeraustoßführungsventil umfasst, das in dem Kammerauslasskanal angebracht ist, um den Ausgang der Abgase zu regulieren.

13. Rückstoßantrieb (1) nach einem der Ansprüche 1 bis 12, **dadurch gekennzeichnet, dass** er ferner ein Schmiersystem (16) umfasst, das den Druck verwendet, der in den Druck- und Rückgewinnungspumpen erzeugt wird, die in dem Antrieb (1) angebracht sind, um ein Schmierfluid zu verteilen.

## Revendications

1. Moteur à réaction (1) qui comprend :
- un bloc compresseur équipé d'au moins un compresseur (2) prévu pour réaliser une compression de l'air qui pénètre dans le moteur (1) et qui comprend, à son tour, un rotor (3) et un stator (4), le stator (4) comprenant un canal d'admission d'air du stator (10) et un canal d'échappement d'air du stator, ce dernier
comprenant une soupape d'expulsion de stator,
- un bloc de combustion, qui comprend à son tour au moins une chambre de combustion (5) prévue pour loger l'allumage d'un carburant avec de l'air sous haute pression provenant du bloc compresseur,
- une turbine (6) actionnée par les gaz d'échappement produits dans la chambre de combustion (5) et qui comprend un système de transmission de couple avec au moins un arbre (7) qui est relié à au moins le compresseur (2), réalisant ainsi la compression d'air susmentionnée, dans lequel le stator (4) du compresseur (2) est excentré par rapport au rotor (3), ce qui permet un déplacement radial alternatif d'un ensemble de pales radiales (8) disposées sur le rotor (3) pour réaliser la fermeture dans un sens radial d'une unité formée par le rotor (3) et le stator (4), le moteur à réaction (1) **caractérisé en ce qu'**il comprend :
- des amortisseurs (13) disposés sur la soupape d'expulsion du stator ; et
- au moins deux autres canaux situés dans le stator (4) dans lequel sont disposées des tiges de distribution électroniques (12) adaptées pour commander les amortisseurs (13).

2. Moteur à réaction (1) selon la revendication 1, **caractérisé en ce que** les pales radiales (8) comprennent des éléments élastiques (9) disposés entre lesdites pales (8) et le rotor (3) pour fournir à ces dernières une récupération automatique de la position, se réglant ainsi sur une face interne du stator (4).

3. Moteur à réaction (1) selon la revendication 2, **caractérisé en ce que** des éléments élastiques (9) sont situés à l'intérieur de l'un des profilés latéraux de la pale (8).

4. Moteur à réaction (1) selon la revendication 3, **caractérisé en ce que** les éléments élastiques (9) sont des ressorts prévus pour exercer une pression entre la pale (8) et l'intérieur du stator (4).

5. Moteur à réaction (1) selon l'une quelconque des revendications 2 à 4, **caractérisé en ce que** les pales (8) sont au moins partiellement sectionnées.

6. Moteur à réaction (1) selon l'une quelconque des revendications précédentes, **caractérisé en ce que** le stator (4) comprend au moins un anneau de retenue disposé sur la face interne de celui-ci prévu pour réaliser la fermeture de l'ensemble formé par le stator (4) et le rotor (3) dans le sens axial.

7. Moteur à réaction (1) selon la revendication 1, **caractérisé en ce que** le compresseur (2) comprend au moins une pale au moins partiellement sectionnée adaptée pour faire un joint labyrinthe et qui comporte des éléments élastiques (9) à l'intérieur de celle-ci sur au moins l'une de ses faces, qui sont adaptés pour exercer une pression depuis la pale par rapport à la face périphérique du rotor (3) pour réaliser le blocage du passage d'air entre le canal d'admission d'air du stator (10) et le canal d'échappement d'air du stator.

8. Moteur à réaction (1) selon la revendication 1, **caractérisé en ce que** le stator (4) du compresseur (2) comprend en outre une chambre annulaire de pression et de régulation (15) raccordée aux tiges de distribution (12).

9. Moteur à réaction (1) selon la revendication 8, **caractérisé en ce que** les tiges de distribution électroniques (12) comprennent une soupape anti-retour prévue pour réaliser un raccordement avec le compresseur (2) et une soupape de détente de compresseur commandé électroniquement et une soupape à deux voies équilibrée adaptée pour agir directement sur : une chaudière ou sur la chaudière et la chambre de pression et de régulation (15).

10. Moteur à réaction (1) selon la revendication 1, **caractérisé en ce que** la au moins une chambre de combustion (5) du bloc de combustion est sphérique et comprend :
• un canal d'admission d'air de chambre,
• un canal d'échappement d'air de chambre, et
• un logement de chambre pour loger un injecteur de carburant.

11. Moteur à réaction (1) selon la revendication 10, **caractérisé en ce que** le bloc de combustion comprend en outre au moins un espace creux dans lequel se trouve une bougie destinée à réaliser l'allumage.

12. Moteur à réaction (1) selon les revendications 10 ou 11, **caractérisé en ce que** le bloc de combustion comprend une soupape de guidage d'admission de la chambre (14) disposée dans le canal d'admission d'air de la chambre pour réguler l'entrée d'air dans la chambre de combustion (5), et une soupape de guidage d'expulsion de la chambre disposée dans le canal d'échappement de la chambre pour réguler la sortie des gaz d'échappement.

13. Moteur à réaction (1) selon l'une quelconque des revendications 1 à 12, **caractérisé en ce qu'**il comprend en outre un système de lubrification (16) qui utilise la pression générée dans les pompes à pression et de récupération disposées dans le moteur (1) pour distribuer un fluide de lubrification.
